# EUROPEAN PATENT SPECIFICATION

(11) **EP 3 995 219 B1**
(45) Date of publication and mention of the grant of the patent: **25.06.2025**
(21) Application number: 21204633.8
(22) Date of filing: 26.10.2021
(51) Int. Cl.: B05D 3/04, B05D 3/06, C08F 2/50, F26B 3/28, F26B 21/14, B05D 5/02, F26B 15/18, F26B 21/04

(54) **APPARATUS FOR COATING MANUFACTURED ARTICLES**
VORRICHTUNG ZUR BESCHICHTUNG HERGESTELLTER ARTIKEL
APPAREIL POUR LE REVÊTEMENT D'ARTICLES MANUFACTURÉS

(30) Priority: 05.11.2020 IT 202000026479
(43) Date of publication of application: 11.05.2022
(73) Proprietor: Elmag S.P.A., 20852 Villasanta (MB) (IT)
(72) Inventor: VALTORTA, Gloria, 20852 VILLASANTA (MB) (IT)
(74) Representative: Tiburzi, Andrea

(56) References cited:
- WO-A1-2020/174352
- DE-A1- 19 810 455
- DE-B3- 102017 008 353
- US-A- 4 491 610
- US-A- 4 839 522

## Description

The present invention relates to an apparatus for coating manufactured articles.

### Field of the invention

More specifically, the invention relates to an apparatus of the aforesaid type designed and manufactured in particular to allow the treatment of manufactured articles, generally having a flat extension, on the upper surface and on all lateral surfaces.

In the following, the description will be directed to the treatment of wooden panels, but it is clear that it should not be considered limited to this specific use.

### Prior art

As it is currently well known, manufactured articles of different nature, such as panels made of wood, panels made of plastic, tiles, and the like, are subjected to a series of treatments to obtain opaque surfaces with a "soft" appearance, even to the touch, as well as scratch-resistant.

For such a scope, the manufactured articles to be treated are preliminarily painted with photosensitive paints. These paints are usually 100% solid, but they can also have a volatile part, such as water or solvent.

Subsequently, such manufactured articles are transported by suitable conveyor means, such as belts and the like, and are subjected to a pre-gelation treatment, by means of UV lamps usually LED or Gallium lamps. Such treatment takes place in a normal atmosphere.

Subsequently, these manufactured articles are subjected to illumination by means of an excimer lamp, with ultraviolet radiation usually having a wavelength of 172 nm. This allows the treatment of the microstructure of the surface of the photosensitive paint, which becomes opaque as well as hard, and therefore resistant to scratches, which is particularly appreciated in the market.

Treatment by means of excimer lamps has to take place in an inert atmosphere. Therefore, the plants according to the prior art provide nitrogen pumping systems, to minimize the oxygen within the volume in which the excimer lamps work, emitting their own radiation, so as to obtain a uniform and optimal treatment of the surface.

Subsequently, a further polymerization step, which takes place by means of ultraviolet lamps, typically gallium or mercury lamps, is carried out. Normally, in order to achieve the best results, in some plants according to the prior art, the final polymerization step takes place by means of both a gallium lamp and a mercury lamp.

A problem of the systems according to the prior art is that of providing a uniform inert atmosphere for the treatment with the excimer lamps and for the subsequent polymerization step.

Furthermore, as known, the nitrogen cost is high. Therefore, the need is felt in the field for systems that allow savings on the quantity of nitrogen used.

In addition, it must also be considered that often in the belt conveyor systems of the apparatuses according to the prior art, oxygen "bubbles" can be created between the panel or the product to be transported in general, and the belt. Therefore, an optimal oxygen cleaning of the belt would be appropriate, in order to allow optimal treatment.

The relevant prior art also comprises the patent applications WO 2020/174352 A1, DE 19810455 A1, US 4839522 A, US 4491610 A, and DE 102017008353 B3.

### Scope of the invention

In light of the above, it is, therefore, scope of the present invention to propose an apparatus for coating manufactured articles that can overcome the limits of the prior art, and in particular that allows a reduction in the use of nitrogen and an increase in the inert atmosphere quality for illumination by excimer lamps.

It is also an object of the present invention to allow an optimal treatment of the lateral surfaces of a panel or of an article in general, and in particular of the head and tail surfaces of the panel itself.

### Object of the invention

It is, therefore, specific object of the present invention an apparatus for coating manufactured articles, such as panels made of wood, fiberglass, ceramic or the like, on which a photosensitive paint is applied beforehand, wherein said manufactured article has un upper surface, a head surface, a tail surface, two side surfaces and a lower surface, comprising at least one radiation source for the treatment of said photosensitive paint, a conveying system, on which said manufactured article is movable in a forward direction, and an inert chamber, in which an inert atmosphere is maintained, characterized in that said conveying system comprises a first conveyor belt and a second conveyor belt, arranged adjacent and in series, so that the manufactured article may move from said first conveyor belt to said second conveyor belt, while it moves in said forward direction, in that said first conveyor belt is arranged, at least mostly, outside said inert chamber, and in that said second conveyor belt is arranged, at least mostly, inside said inert chamber.

Always according to the invention, said apparatus may comprise a bulkhead, arranged to delimit said inert chamber, having an opening, through which said manufactured article passes when it enters said inert chamber, moving from said first conveyor belt to said second conveyor belt.

Still according to the invention, said conveying system comprises at least one optic group having a housing cavity, arranged in correspondence of said at least one radiation source, said at least one optic group may comprise a reflecting member, arranged in said housing cavity, in correspondence of said radiation source, so as to spread its emitted radiation, wherein said reflecting member has a superficial shape so as to spread the incident radiation on said head surface and on said tail surface when respectively said panel moves towards, and moves away from said housing cavity while it is moved by said conveying system.

Further according to the invention, said reflecting member may be arranged, with its longitudinal extension, transversely with respect to said forward direction of said manufactured article.

Advantageously according to the invention, said reflecting member may have a longitudinal extension that exceeds the width of said manufactured article, and it is arranged transversely with respect to said forward direction of said manufactured article, for spreading the incident radiation on said lateral surfaces of said manufactured article while it passes over said housing cavity.

Always according to the invention, said reflecting member may have one of the following shapes: convex, shaped by two planes arranged to shape an inverted V; concave, shaped by two planes arranged to shape a V; shaped by two curved surfaces joined along a line, so that it has a cusp section.

Still according to the invention, said at least one optic group may comprise: a lower cylinder, returning said at least one conveyor belt; and a pair of return cylinders, arranged so as to deviate the vertical path of the conveyor belt; wherein said lower cylinder and said pair of return cylinders realize the housing cavity on said at least one conveyor belt, below the sliding surface on the conveyor belt of manufactured article; and wherein said reflecting member is arranged above and in correspondence to said lower cylinder.

Further according to the invention, the reflecting surface of said reflecting member may be smooth and/or hammered and/or pleated and/or hammered and/or glazed or/and pleated.

Advantageously according to the invention, said apparatus may comprise: a pre-gelling station, having an ultraviolet radiation source; and an excimer irradiation station, having an excimer lamp, and arranged downstream said pre-gelling station; said conveying system may comprise a first optic group, arranged in correspondence of said ultraviolet radiation source, and said conveying system may comprise a second optic group, arranged in correspondence of said excimer lamp.

Preferably according to the invention, said apparatus may comprise a nitrogen injection station, comprising at least one nitrogen injector, arranged on the surface of said second conveyor belt, arranged upstream of said excimer irradiation station, and at least one nitrogen injector, arranged below the surface of said second conveyor belt, arranged upstream of said excimer irradiation station, wherein said nitrogen injectors are configured for emitting nitrogen on said second conveyor belt.

Always according to the invention, said apparatus may comprise a further nitrogen injector, arranged downstream of said excimer irradiation station.

Still according to the invention, said apparatus may comprise a polymerization station, having a gallium ultraviolet lamp, and a mercury ultraviolet lamp, arranged in series to said gallium ultraviolet lamp.

Advantageously according to the invention, said apparatus may comprise a nitrogen treatment group, having a recirculation fan, for recirculating the nitrogen contained in said inert chamber, a recirculation duct, having a first end connected to said recirculation fan, an entrance door, to which a second end of said recirculation duct is connected, and an extraction fan, for extracting the exhausted nitrogen from said inert chamber.

Further according to the invention, said recirculation fan may be arranged in the upper portion of the inert chamber and downstream of said excimer irradiation station.

Always according to the invention, said extraction fan may be arranged in the lower portion of said inert chamber and downstream of said excimer irradiation station.

Still according to the invention, said entrance door may be obtained on said bulkhead.

### Brief description of the figures

The present invention will be now described, for illustrative but not limitative purposes, according to its preferred embodiments, with particular reference to the figures of the enclosed drawings, wherein:
figure 1 shows a schematic side view of a first embodiment of an apparatus for coating, according to the present invention;
figure 2A shows an ultraviolet radiation source while treating the head surface of a panel;
figure 2B shows the ultraviolet radiation source of figure 2A while treating the tail surface of a panel;
figure 3A shows an excimer radiation source while treating the head surface of a panel;
figure 3B shows the excimer radiation source of figure 3A while treating the tail surface of a panel;
figure 4A shows an inverted V-section reflecting member with smooth surfaces;
figure 4B shows an inverted V-section reflecting member with pleated surfaces;
figure 4C shows an inverted V-section reflecting member with hammered surfaces;
figure 4D shows an inverted V-section reflecting member with pleated and hammered surfaces;
figure 5A shows a V-section reflecting member with smooth surfaces;
figure 5B shows a V-section reflecting member with pleated surfaces;
figure 5C shows a V-section reflecting member with hammered surfaces;
figure 5D shows a V-section reflecting member with pleated and hammered surfaces;
figure 6A shows a V-section reflecting member with two smooth curved surfaces;
figure 6B shows a V-section reflecting member with hammered curved surfaces;
figure 7A shows a further embodiment of a V-section reflecting member with two smooth curved surfaces;
figure 7B shows a further embodiment of a V-section reflecting member with two hammered curved surfaces; and
figure 8 shows a schematic view of a second embodiment of a coating apparatus according to the present invention. **Detailed description of the figures**

In the various figures, similar parts will be indicated by the same reference numbers.

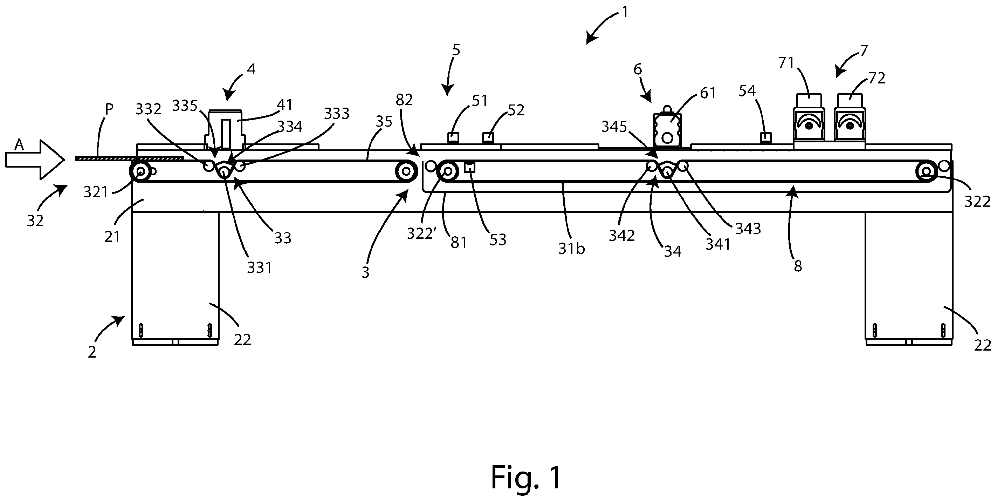

With reference to figure 1, a side view of an apparatus for coating manufactured articles, such as panels made of wood, plastic, fiberglass, ceramic tiles, and the like is shown, indicated as a whole with the numerical reference 1.

The apparatus 1 essentially comprises a supporting frame 2, a conveying system 3 of the manufactured article to be treated, capable of conveying the manufactured article P, so that it can be subjected to treatments of different stations, a pre-gelling station 4, a nitrogen injection station 5, an excimer irradiation station 6, a polymerization station 7, and an inert chamber 8.

The supporting frame 2 comprises a substantially flat base 21, on which the conveying system 3, the pre-gelling station 4, the nitrogen injection station 5, the excimer irradiation station 6, and the polymerization station 7 are installed. The base 21 is supported by supports 22. Also, the inert chamber 8 is contained in said base 21.

The conveying system 3 comprises a first conveyor belt 31a and a second conveyor belt 31b, arranged adjacent and in series, so that the panel P can easily pass from said first conveyor belt 31a to said second conveyor belt 31b, always advancing in the advancing direction A. The conveyor system 3 also comprises driving members 32, having a first driving roller 321 of said first conveyor belt 31a and a second driving roller 322 of said second conveyor belt 31b.

The conveyor belts 31a and 31b are preferably of the net type, so as to be easily washable with nitrogen.

Said first 321 and second 322 driving rollers can be motorized and arranged so that the panel P is moved along the advancing direction indicated by the arrow A, lying on the upper surface of the first conveyor belt 31a or of the second conveyor belt 31b, so that the top surface of panel P faces up.

The conveying system 3 also comprises a first optic group 33, and a second optic group 34.

In particular, the first optic group 33 comprises a lower cylinder 331, returning said first conveyor belt 31a, and a pair of return cylinders 332 and 333, arranged in such a way as to create returns of the first conveyor belt 31a, for realizing a housing cavity 335 under the sliding surface of the first conveyor belt 31a, which, as can be seen, is V-shaped. In particular, the lower cylinder 331 is located in a lower position with respect to the two return cylinders 332 and 333.

In other embodiments, said first optical group 33 can also comprise four, five or more returning cylinders.

Said first optic group 33 also comprises a reflecting member 334, such as a mirror, having, in the embodiment at issue, a convex shape, formed by two planes, arranged to form an inverted V. The reflecting member 334 is arranged transversely with respect to the advancing direction A and housed in said housing cavity 335. In particular, said reflecting member 334 is arranged, with its longitudinal extension, transversely with respect to said advancing direction A of said panel or manufactured article P.

Said reflecting member 334 is arranged above and in correspondence with said lower cylinder 331. The top of said reflecting member 334 is arranged so as to be at a lower height than the sliding surface of the panel P. In other words, when the panel P slides on the conveyor belt 31a, the edge, formed by the two reflecting planes of said reflecting member 334, does not touch the panel P, remaining a space or a gap between the latter and said top of the reflecting member 334.

In a completely similar way, the optic group 34 comprises, in the embodiment at issue, a respective lower cylinder 341, a pair of return cylinders 342 and 343, arranged like the three cylinders 331, 332, and 333 of said first optic group 33, they are also arranged to form a housing cavity 345, and a reflecting member 344, having a shape and an arrangement similar to the reflecting member 334 of said first optic group 33, housed in said housing cavity 345. Said reflecting member 344 is also arranged, with its longitudinal extension, transversely with respect to said advancing direction A of said panel or manufactured article P.

Furthermore, in other embodiments, said second optical group 34 can also comprise four, five or more returning cylinders.

The reflecting members 334 and 344 can also have other shapes and surfaces, as better described below.

The pre-gelling station 4 comprises at least one ultraviolet or UV radiation source 41, arranged above said first optic group 34, so as to direct the radiation emitted on the upper surface of the panel P and to gel the paint on the upper surface, on the side surfaces and on the head and tail and lateral surfaces of the panel P, which in the case at issue is a wooden panel P. Naturally, the UV source 41 does not illuminate the lower surface of the panel P that rests on the conveyor belt 31.

Generally, the UV radiation source 41 is a gallium lamp or a LED lamp. Generally, the radiation, in the case at issue, is carried out with a normal and uncontrolled atmosphere (therefore containing oxygen).

The paint, with which the surface of the panel P is treated before gelling, is of the photosensitive type, and it can be either solid or with a volatile part, such as water or solvent.

The nitrogen injection station 5 comprises a pair of nitrogen injectors 51 and 52, arranged above the surface of the second conveyor belt 31b, on which the placed panel P slides, and a third nitrogen injector 53, arranged below the surface of the second conveyor belt 31b, on which the placed panel P slides.

Finally, a fourth nitrogen injector 54 is arranged between the excimer irradiation station 6 and the polymerization station 7.

Said nitrogen injectors 51, 52, 53, and 54 are suitable for making an inert atmosphere on, or around the panel P and the second conveyor belt 31b, as will be better explained in the following, drastically reducing or eliminating the oxygen on the surface of the panel P.

Subsequently, downstream of the nitrogen injection station 5, an excimer irradiation station 6 is provided, comprising an excimer lamp 61, arranged in correspondence with said second optic group 34, configured to emit ultraviolet radiation with a wavelength of 172 nm, so as to realize microstructures on the surface of the panel P with an opaque shape and particularly pleasant to the touch, as well as having a high degree of hardness, so as to be scratch resistant.

The second optic group 34 allows distributing, as the panel P passes over the second conveyor belt 31b, the radiation of said excimer lamp 61 on the upper surface of the panel P, as well as on the lateral surfaces and on the head and tail surfaces of said panel P, as it will be better explained below.

As is well known, the process under examination has to take place in an inert atmosphere, therefore with large nitrogen content, otherwise, the effect on the panel P described above cannot occur.

Finally, apparatus 1 comprises a polymerization station 7, downstream of the excimer irradiation station 6, which comprises a gallium UV lamp 71 and a mercury UV lamp 72, arranged in series.

The function of said UV lamps 71 and 72 is to carry out polymerization of the surface of the panel P, after the treatment with the excimer lamp 61.

Furthermore, the coating apparatus 1 of the present embodiment also has an inert chamber 8, in which the second conveyor belt 31b is contained, at least mainly, in which it is possible to maintain the atmosphere created by the nitrogen injection station 5.

The first conveyor belt 31a is instead positioned, at least mainly, outside the inert chamber 8.

The inert chamber 8 allows creating an inert atmosphere with nitrogen. In this way, oxygen contamination of the second conveyor belt 31b is limited, reducing the need for its washing and therefore also reducing nitrogen consumption.

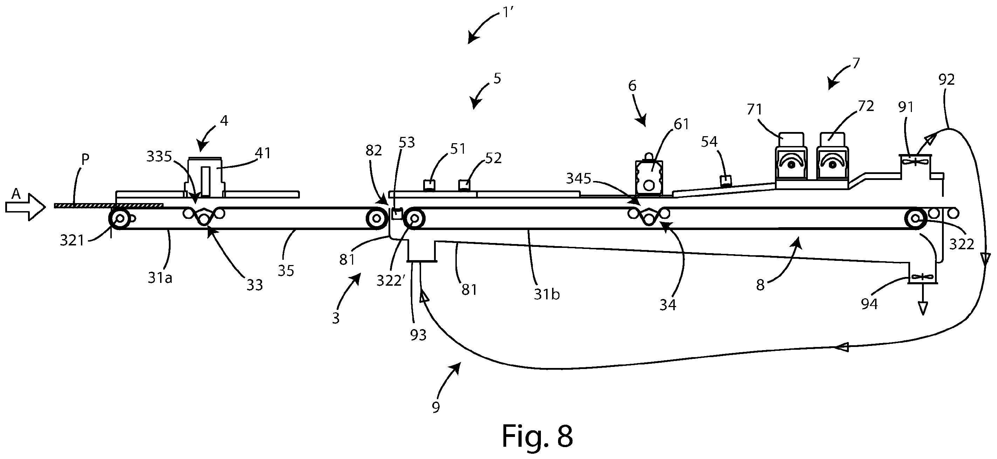

The inert chamber 8 is g by means of a bulkhead 81, arranged to isolate and identify said inert chamber 8, in which the second conveyor belt 31b is contained. The bulkhead 81 has a longitudinal opening 82, which can be seen in section in figure 8, through which the panel P can pass through when it enters said inert chamber 81, passing from said first conveyor belt 31a to said second conveyor belt 31b.

Furthermore, the nitrogen injection station 5, and in particular the nitrogen injectors 51, 52 and 53, are arranged in correspondence with said second conveyor belt 31b, in the portion closest to the first conveyor belt 31a. Furthermore, it can be observed that in the present embodiment the third nitrogen distributor device 53 is arranged precisely in correspondence with said opening 82.

The operation of the apparatus for coating 1 described above is as follows.

The panel P has an upper surface Ps, a head surface Pt, a tail surface Pc, two side surfaces PI and a lower surface Pi.

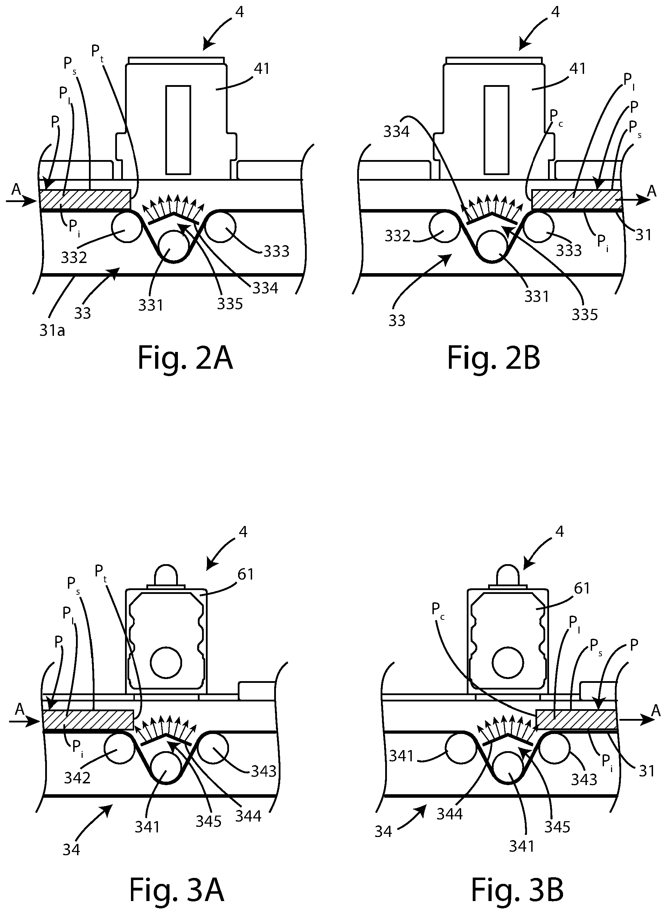

With reference to figure 2A, when the panel P is inserted into the apparatus 1 and arranged on the conveyor belt 31a, to advance in the advancing direction A, when the panel P arrives near the pre-gelling station 4, and consequently the first optic group 33, the UV light emitted by the UV radiation source 41 is reflected by the reflecting member 334, such that the reflection can also affect the head surface of the panel Pt.

Subsequently, when the panel P passes under the UV radiation source 41, such that said panel P is overlapped or overlying said reflecting member 334, the lower surface Pi does not touch the reflecting member 334 and the radiation of the UV radiation source 41 hits the upper surface Ps.

The reflecting member 334 has a transverse extension with respect to the advancing direction A that exceeds the width of the panel P. Therefore, while the panel P itself is located above said reflecting member 334, the same member, although having a convex shape, is capable of spreading the beams incident thereon, in particular on the side portions exceeding the width of the panel P, in such a way that these beams hit and also treat the lateral surfaces PI of the panel itself.

Finally, when the lower surface Pi of the panel P begins to discover again the reflecting member 334 of the pre-gelling station 4, as shown in figure 2B, the radiation emitted by the UV radiation source 41 of the pre-gelling station 4 is scattered by said reflecting member 334, so as to also hit the rear or tail surface of the panel Pc.

In this way, when the panel P has completely crossed the pre-gelling station 4, the upper surfaces Ps, the head Pt, the tail Pc, and the lateral surfaces PI will be treated with the radiation emitted by said UV radiation source 41.

Subsequently, as mentioned, nitrogen injection station 5 allows the realization of an inert atmosphere on the panel P, drastically reducing or eliminating the oxygen in the circumstances of the surfaces of the panel P, thanks to the injectors 51, 52, and 53.

Subsequently, in an inert atmosphere, the treatment takes place by means of the radiation of the excimer lamp 61 in the excimer irradiation station 6.

The scattering of the radiation emitted by said excimer lamp 61 on the upper Ps, lateral PI, head Pt and tail Pc surfaces is completely similar to the one described for the radiation emitted by said UV radiation source 41.

In particular, with reference to figure 3A, it is observed the treatment by means of the excimer lamp 61 of the head surface Pt, thanks to the reflection of the incident radiation on the reflecting member 344 of said second optic group 34.

Similarly, when the panel P passes under the excimer lamp 61, the upper surface Ps and the lateral surfaces PI of the panel P are treated.

Finally, with reference to figure 3B, when the panel P uncovers said second optic group 34, the incident radiation emitted by said excimer lamp 61 on the reflecting member 344 and scattered therefrom, affects the tail surface Pc of said panel P.

In this way, also in this case, the upper surface Ps, the head surface Pt, the tail surface Pc, and the lateral surfaces PI are treated with the radiation emitted by said excimer lamp 61.

On the basis of the above, with the exception of the lower surface Pi of said panel P, all the other surfaces of panel P will be treated with the radiation emitted in said pre-gelling station 4 and in said excimer irradiation station 6.

Once the panel P has been treated by the excimer lamp 61, it is subjected to the treatment of the gallium UV lamp 71 and the mercury UV lamp 72 of said polymerization station 7, before leaving said apparatus for coating 1.

In the present embodiment, the provision of a first conveyor belt 31a for transporting the panel P in the pre-gelling step 4, in which an inert atmosphere is not required, and a second conveyor belt 31b for the subsequent steps, in which instead an inert atmosphere is required, it allows obtaining various advantages and technical effects.

In fact, it has to be considered that oxygen can somehow become trapped on the surface of the conveyor belt. Consequently, when the panel P passes from said first conveyor belt 31a to said second conveyor belt 31b, the nitrogen injectors 51, 52 and 53 insert nitrogen inside the inert chamber 8, reducing the oxygen percentage on the surface of said second conveyor belt 31b.

The conveyor belts 31a and 31b are of the net type. The nitrogen injection through the upper injectors 51 and 52 and the lower injector 53 clean any residual oxygen from the second conveyor belt 31b, blowing nitrogen under it and passing it between the belt links.

The third nitrogen injector 53, arranged at the bottom, could be positioned in place of the first inlet roller 322' of the second conveyor belt 31b, using that space to clean the edges of the piece.

In other embodiments, a suction or a lower vent is provided to eliminate any pockets of oxygen, so as to allow better cleaning of the lower sides and edges of the panel P.

The reflecting member 334 or 344 of said first optic group 33 or of said second optic group 34 can be of different types.

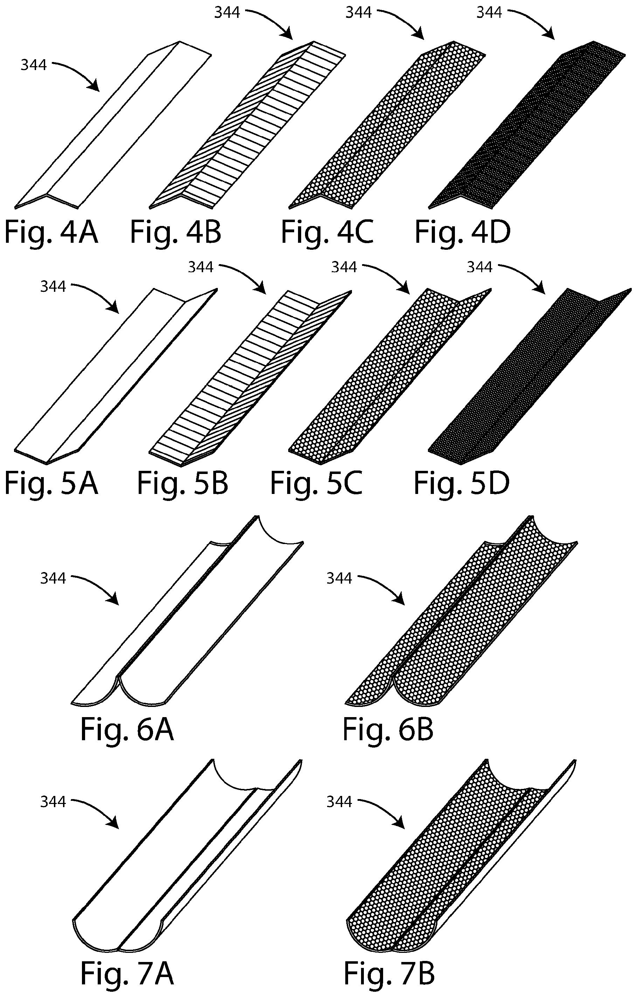

In particular, figure 4A shows the embodiment of the smooth surface inverted V-shaped reflecting member 334 or 344. Figure 4B shows the same reflecting member of figure 4A with a pleated surface, in which the pleats are aligned or substantially parallel to the advancing direction A of the panel P.

In figure 4C, on the other hand, the surface is hammered, while in figure 4D the surface of the reflecting member is both pleated and hammered.

The different variants allow scattering the light emitted by the UV source 41 or by the excimer lamp 61 in a more random way, so as to better treat the surfaces, on which said reflecting members diffuse the received radiation.

Figure 5A shows, instead, a V-shaped reflecting member 334 or 344. Similarly, figure 5B shows the reflecting member of figure 5A with the pleated surface, while figure 5C shows the reflecting member with a hammered surface. Finally, figure 5D shows the reflecting member of figure 5A with the pleated and hammered surface.

Figure 6A shows a reflecting member 334 or 344 formed by two curved surfaces, coupled along a line, in such a way that it has a cusp section, in which the reflecting surface is curved but smooth. Figure 6B, on the other hand, shows the same reflecting member of figure 6A with hammered curved surfaces.

Figure 7A shows a reflecting member 344 (or also the reflecting member 334) formed by two curved surfaces, coupled along a line, in which the reflecting surface is curved but smooth, and in which the angle formed by the planes tangent to the two external surfaces along said junction line is greater than that shown in figures 6A or 6B. Figure 7B shows the same reflecting member of figure 7A with hammered curved surfaces.

In other embodiments, the surface of the reflecting member can be satin-finished.

The aforementioned embodiments of reflecting member 344 (or 334) allow optimizing the diffusion of the radiation incident on them, according to the dimensions of the optic groups 33 or 34.

Referring now to figure 8, a second embodiment of an apparatus for coating 1' can be observed.

In addition to the structure described in the first embodiment indicated above, the apparatus 1' also comprises a nitrogen treatment group 9 for treating the nitrogen contained in said inert chamber 8.

The nitrogen treatment group 9 comprises a recirculation fan 91, for the recirculation of the nitrogen contained, at least mainly, in said inert chamber 8, in which the second conveyor belt 31b is contained, arranged downstream of said polymerization station 7. The recirculation fan 91 is positioned in the upper portion of the inert chamber 8.

The nitrogen treatment group 9 also comprises a recirculation duct 92, having a first end connected to said recirculation fan 91, an entrance door 93, obtained on said bulkhead 81, arranged in correspondence with the nitrogen injectors 51, 52, and 53, or in the proximity of said opening door 82, to which a second end of said recirculation duct 92 is connected.

Said nitrogen treatment group 9 further comprises an extraction fan 94, also arranged downstream of said polymerization station 7, for extracting the exhausted nitrogen from said inert chamber 8, in which the second conveyor belt 31b is contained. The extraction fan 94 is arranged in the lower portion of the inert chamber 8.

The operation of the apparatus 1', according to the second embodiment, is similar to the one described for the first embodiment.

In this case, however, the nitrogen treatment group 9 allows the recirculation of the purest nitrogen from the inert chamber 8. In fact, as it is known, the nitrogen tends to position higher than oxygen, being lighter than the latter, which therefore positions itself downwards. Consequentially, the nitrogen extracted from the recirculation fan 91 is purer than the one found downwards, which instead is extracted by the extraction fan 94.

The nitrogen extracted from the recirculation fan 91 is returned to the inert chamber 8 thanks to the recirculation duct 92, through the entrance door 93, which is located directly in correspondence with, or in proximity to the opening 82, or precisely in the point where it is most likely that there may be a greater presence of oxygen. In this way, by the action of the aforementioned nitrogen injectors 51, 52, and 53, and because of the nitrogen recovered by means of the recirculation duct 92, in this portion of the inert chamber 8, in which the oxygen could be more concentrated, the nitrogen distribution is concentrated, so as to minimize the probability that oxygen coming with the panel, in any case from the portion of the apparatus 1 that includes the pre-gelling station 4, can somehow adhere to the second conveyor belt 36.

### Advantages

An advantage of the apparatus for coating, according to the present invention, is to allow an optimal distribution of the radiations for the treatment of paints on the manufactured articles, in particular on the upper surface, and on the lateral surfaces, as well as on the tail and head surfaces, of such manufactured articles.

A further advantage of the apparatus for coating, according to the present invention, is to reduce the overall nitrogen consumption for carrying out the treatments in an inert atmosphere.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Apparatus for coating (1; 1') manufactured articles (P), such as panels made of wood, fiberglass, ceramic or the like, on which a photosensitive paint is applied beforehand, wherein said manufactured article (P) has un upper surface (Ps), a head surface (Pt), a tail surface (Pc), two side surfaces (PI) and a lower surface (Pi), comprising
at least one radiation source (41, 61) for the treatment of said photosensitive paint,
a conveying system (3), on which said manufactured article (P) is movable in a forward direction (A), and
an inert chamber (8), in which an inert atmosphere is maintained,
**characterized**
**in that** said conveying system (3) comprises a first conveyor belt (31a) and a second conveyor belt (31b), arranged adjacent and in series, so that the manufactured article (P) may move from said first conveyor belt (31a) to said second conveyor belt (36), while it moves in said forward direction (A),
**in that** said first conveyor belt (31a) is arranged, at least mostly, outside said inert chamber (8), and
**in that** said second conveyor belt (31b) is arranged, at least mostly, inside said inert chamber (8).

2. Apparatus (1; 1') according to the preceding claim, **characterized in that** it comprises a bulkhead (81), arranged to delimit said inert chamber (8), having an opening (82), through which said manufactured article (P) passes when it enters said inert chamber (8), moving from said first conveyor belt (31a) to said second conveyor belt (31b).

3. Apparatus (1; 1') according to any one of the preceding claims, **characterized**
**in that** said conveying system (3) comprises at least one optic group having a housing cavity (335, 345), arranged in correspondence of said at least one radiation source (41, 61),
**in that** said at least one optic group (33, 34) comprises a reflecting member (334, 344), arranged in said housing cavity (335, 345), in correspondence of said radiation source (41, 61), so as to spread its emitted radiation,
wherein said reflecting member (334, 344) has a superficial shape so as to spread the incident radiation on said head surface (Pt) and on said tail surface (Pc) when respectively said panel (P) moves towards, and moves away from said housing cavity (335, 345) while it is moved by said conveying system (3).

4. Apparatus (1; 1') according to the preceding claim, **characterized in that** said reflecting member (334, 344) is arranged, with its longitudinal extension, transversely with respect to said forward direction (A) of said manufactured article (P).

5. Apparatus (1; 1') according to any one of claims 3 or 4, **characterized in that** said reflecting member (334, 344) has a longitudinal extension that exceeds the width of said manufactured article (P), and it is arranged transversely with respect to said forward direction (A) of said manufactured article (P), for spreading the incident radiation on said lateral surfaces (PI) of said manufactured article (P) while it passes over said housing cavity (335, 345).

6. Apparatus (1; 1') according to any one of claims 3-5, **characterized in that** said reflecting member (334, 344) has one of the following shapes:
convex, shaped by two planes arranged to shape an inverted V;
concave, shaped by two planes arranged to shape a V;
shaped by two curved surfaces joined along a line, so that it has a cusp section.

7. Apparatus (1; 1') according to any one of claims 3-6, **characterized in that** said at least one optic group (33, 34) comprises:
a lower cylinder (331, 341), returning said at least one conveyor belt (31a, 31b); and
a pair of return cylinders (332, 333 and 342, 343), arranged so as to deviate the vertical path of the conveyor belt (31a, 31b);
wherein said lower cylinder (331, 341) and said pair of return cylinders (332, 333 and 342, 343) realize the housing cavity (335, 345) on said at least one conveyor belt (31a, 31b), below the sliding surface on the conveyor belt (31, 35, 36) of manufactured article (P); and
wherein said reflecting member (334, 344) is arranged above and in correspondence to said lower cylinder (331, 341).

8. Apparatus (1; 1') according to any one of claims 3-7, **characterized in that** the reflecting surface of said reflecting member (334, 344) is smooth and/or hammered and/or glazed or/and pleated.

9. Apparatus (1; 1') according to any one of the preceding claims, **characterized**
**in that** it comprises:
a pre-gelling station (4), having an ultraviolet radiation source (41); and
an excimer irradiation station (6), having an excimer lamp (61), and arranged downstream said pre-gelling station;
**in that** said conveying system (3) comprises a first optic group (33), arranged in correspondence of said ultraviolet radiation source (41), and
**in that** said conveying system (3) comprises a second optic group (34), arranged in correspondence of said excimer lamp (61).

10. Apparatus (1; 1") according to any one of the preceding claims, **characterized in that** it comprises a nitrogen injection station (5), comprising
at least one nitrogen injector (51, 52), arranged on the surface of said second conveyor belt (31b), arranged upstream of said excimer irradiation station (6), and
at least one nitrogen injector (53), arranged below the surface of said second conveyor belt (31b), arranged upstream of said excimer irradiation station (6),
wherein said nitrogen injectors (51, 52, 53) are configured for emitting nitrogen on said second conveyor belt (31b).

11. Apparatus (1; 1") according to the preceding claim, **characterized in that** it comprises a further nitrogen injector (54), arranged downstream of said excimer irradiation station (6).

12. Apparatus (1) according to any one of the preceding claims, **characterized in that** it comprises a polymerization station (7), having
a gallium ultraviolet lamp (71), and
a mercury ultraviolet lamp (72), arranged in series to said gallium ultraviolet lamp (71).

13. Apparatus (1') according to any one of the preceding claims, **characterized in that** it comprises a nitrogen treatment group (9), having
a recirculation fan (91), for recirculating the nitrogen contained in said inert chamber (8),
a recirculation duct (92), having a first end connected to said recirculation fan (91),
an entrance door (93), to which a second end of said recirculation duct (92) is connected, and
an extraction fan (94), for extracting the exhausted nitrogen from said inert chamber (8).

14. Apparatus (1') according to the preceding claim, when dependent on claim 9, **characterized in that** said recirculation fan (91) is arranged in the upper portion of the inert chamber (8) and downstream of said excimer irradiation station (6).

15. Apparatus (1') according to any one of claims 13 or 14, when dependent on claim 9, **characterized in that** said extraction fan (94) is arranged in the lower portion of said inert chamber (8) and downstream of said excimer irradiation station (6).

16. Apparatus (1') according to any one of claims 13 - 15, **characterized in that** said entrance door (93) is obtained on said bulkhead (81).

## Patentansprüche

1. Vorrichtung zum Beschichten (1; 1') von hergestellten Gegenständen (P), wie Platten aus Holz, Glasfaser, Keramik oder dergleichen, auf die zuvor eine lichtempfindliche Farbe aufgebracht wird, wobei der hergestellte Gegenstand (P) eine obere Oberfläche (Ps), eine Kopffläche (Pt), eine Endfläche (Pc), zwei Seitenflächen (PI) und eine untere Oberfläche (Pi) aufweist, umfassend
mindestens eine Strahlungsquelle (41, 61) für die Behandlung der lichtempfindlichen Farbe,
ein Fördersystem (3), auf dem der hergestellte Artikel (P) in einer Vorwärtsrichtung (A) beweglich ist, und
eine Inertkammer (8), in der eine inerte Atmosphäre aufrechterhalten wird,
gekennzeichnet
dass das Fördersystem (3) ein erstes Förderband (31a) und ein zweites Förderband (31b) umfasst, die nebeneinander und in Reihe angeordnet sind, so dass sich der hergestellte Artikel (P) von dem ersten Förderband (31a) zu dem zweiten Förderband (36) bewegen kann, während er sich in der Vorwärtsrichtung (A) bewegt,
dass das erste Förderband (31a) zumindest größtenteils außerhalb der Inertkammer (8) angeordnet ist, und dass das zweite Förderband (31b) zumindest größtenteils innerhalb der Inertkammer (8) angeordnet ist.

2. Vorrichtung (1; 1') nach dem vorhergehenden Anspruch, **dadurch gekennzeichnet, dass** sie eine Trennwand (81) umfasst, die so angeordnet ist, dass sie die inerte Kammer (8) begrenzt, und die eine Öffnung (82) aufweist, durch die der hergestellte Artikel (P) hindurchgeht, wenn er in die inerte Kammer (8) eintritt und sich von dem ersten Förderband (31a) zu dem zweiten Förderband (31b) bewegt.

3. Vorrichtung (1; 1') nach einem der vorhergehenden Ansprüche, **dadurch gekennzeichnet**
**dass** das Fördersystem (3) mindestens eine optische Gruppe mit einem Gehäusehohlraum (335, 345) umfasst, der in Übereinstimmung mit der mindestens einen Strahlungsquelle (41, 61) angeordnet ist,
**dass** die mindestens eine optische Gruppe (33, 34) ein reflektierendes Element (334, 344) umfasst, das in dem Gehäusehohlraum (335, 345) in Übereinstimmung mit der Strahlungsquelle (41, 61) angeordnet ist, um ihre emittierte Strahlung zu verteilen,
wobei das reflektierende Element (334, 344) eine Oberflächenform hat, um die einfallende Strahlung auf der Kopffläche (Pt) und auf der Endfläche (Pc) zu verteilen, wenn sich die Platte (P) auf den Gehäusehohlraum (335, 345) zubewegt bzw. von ihm wegbewegt, während sie von dem Fördersystem (3) bewegt wird.

4. Vorrichtung (1; 1') nach dem vorhergehenden Anspruch, **dadurch gekennzeichnet, dass** das reflektierende Element (334, 344) mit seiner Längserstreckung quer zu der Vorwärtsrichtung (A) des hergestellten Artikels (P) angeordnet ist.

5. Vorrichtung (1; 1') nach einem der Ansprüche 3 oder 4, **dadurch gekennzeichnet, dass** das reflektierende Element (334, 344) eine Längserstreckung aufweist, die die Breite des hergestellten Gegenstandes (P) übersteigt, und dass es quer zur Vorwärtsrichtung (A) des hergestellten Gegenstandes (P) angeordnet ist, um die einfallende Strahlung auf den Seitenflächen (PI) des hergestellten Gegenstandes (P) zu verteilen, während sie über den Gehäusehohlraum (335, 345) läuft.

6. Vorrichtung (1; 1') nach einem der Ansprüche 3 bis 5, **dadurch gekennzeichnet, dass** das reflektierende Element (334, 344) eine der folgenden Formen aufweist:
konvex, geformt durch zwei Ebenen, die so angeordnet sind, dass sie ein umgekehrtes V bilden;
konkav, geformt durch zwei V-förmig angeordnete Ebenen;
die aus zwei gekrümmten Flächen besteht, die entlang einer Linie miteinander verbunden sind, so dass sie einen Höckerschnitt aufweist.

7. Vorrichtung (1; 1') nach einem der Ansprüche 3 bis 6, **dadurch gekennzeichnet, dass** die mindestens eine optische Gruppe (33, 34) umfasst:
einen unteren Zylinder (331, 341), der das mindestens ein Förderband (31a, 31b) zurückführt; und
ein Paar Umlenkzylinder (332, 333 und 342, 343), die so angeordnet sind, dass sie den vertikalen Weg des Förderbandes (31a, 31b) umleiten;
wobei der untere Zylinder (331, 341) und das Paar von Rückführzylindern (332, 333 und 342, 343) den Gehäusehohlraum (335, 345) auf dem mindestens ein Förderband (31a, 31b) unterhalb der Gleitfläche auf dem Förderband (31, 35, 36) des hergestellten Artikels (P) realisieren; und
wobei das reflektierende Element (334, 344) oberhalb und in Übereinstimmung mit dem unteren Zylinder (331, 341) angeordnet ist.

8. Vorrichtung (1; 1') nach einem der Ansprüche 3 bis 7, **dadurch gekennzeichnet, dass** die reflektierende Oberfläche des reflektierenden Elements (334, 344) glatt und/oder gehämmert und/oder glasiert oder/und gefaltet ist.

9. Vorrichtung (1; 1') nach einem der vorhergehenden Ansprüche, **dadurch gekennzeichnet**
**dass** sie umfasst:
eine Vorgelierstation (4) mit einer Ultraviolettstrahlungsquelle (41); und
eine Excimer-Bestrahlungsstation (6) mit einer Excimer-Lampe (61), die der Vorgelierstation nachgeschaltet ist;
**dass** das Fördersystem (3) eine erste optische Gruppe (33) umfasst, die in Übereinstimmung mit der ultravioletten Strahlungsquelle (41) angeordnet ist, und
**dass** das Fördersystem (3) eine zweite optische Gruppe (34) umfasst, die in Übereinstimmung mit der Excimerlampe (61) angeordnet ist.

10. Vorrichtung (1; 1") nach einem der vorhergehenden Ansprüche, **dadurch gekennzeichnet, dass** sie eine Stickstoffinjektionsstation (5) umfasst,
die mindestens einen Stickstoffinjektor (51, 52) umfasst, der auf der Oberfläche des zweiten Förderbandes (31b) stromaufwärts von der Excimer-Bestrahlungsstation (6) angeordnet ist, und mindestens einen Stickstoffinjektor (53), der unterhalb der Oberfläche des zweiten Förderbandes (31b) und stromaufwärts von der Excimer-Bestrahlungsstation (6) angeordnet ist,
wobei die Stickstoffinjektoren (51, 52, 53) so konfiguriert sind, dass sie Stickstoff auf das zweite Förderband (31b) emittieren.

11. Vorrichtung (1; 1") nach dem vorhergehenden Anspruch, **dadurch gekennzeichnet, dass** sie einen weiteren Stickstoffinjektor (54) umfasst, der der Excimer-Bestrahlungsstation (6) nachgeschaltet ist.

12. Vorrichtung (1) nach einem der vorhergehenden Ansprüche, **dadurch gekennzeichnet, dass** sie eine Polymerisationsstation (7) mit
einer Gallium-Ultraviolett-Lampe (71) umfasst, und
eine Quecksilber-Ultraviolettlampe (72), die in Reihe mit der Gallium-Ultraviolettlampe (71) angeordnet ist.

13. Vorrichtung (1') nach einem der vorhergehenden Ansprüche, **dadurch gekennzeichnet, dass** sie eine Stickstoffbehandlungsgruppe (9) umfasst, mit
ein Umwälzgebläse (91), um den in der Inertkammer (8) enthaltenen Stickstoff umzuwälzen,
einen Rückführungskanal (92), dessen erstes Ende mit dem Rückführgebläse (91) verbunden ist,
eine Eingangstür (93), mit der ein zweites Ende des Rückführungskanals (92) verbunden ist, und
ein Absauggebläse (94), um den abgesaugten Stickstoff aus der Inertkammer (8) abzusaugen.

14. Vorrichtung (1') nach dem vorhergehenden Anspruch in Abhängigkeit von Anspruch 9, **dadurch gekennzeichnet, dass** das Umwälzgebläse (91) im oberen Teil der Inertkammer (8) und stromabwärts der Excimer-Bestrahlungsstation (6) angeordnet ist.

15. Vorrichtung (1') nach einem der Ansprüche 13 oder 14, wenn sie von Anspruch 9 abhängt, **dadurch gekennzeichnet, dass** das Absauggebläse (94) im unteren Teil der Inertkammer (8) und stromabwärts von der Excimer-Bestrahlungsstation (6) angeordnet ist.

16. Vorrichtung (1') nach einem der Ansprüche 13 bis 15, **dadurch gekennzeichnet, dass** die Eingangstür (93) an der Stirnwand (81) angebracht ist.

## Revendications

1. Appareil pour le revêtement (1; 1') d'articles manufacturés (P), tels que des panneaux en bois, en fibre de verre, en céramique ou similaires, sur lesquels une peinture photosensible est appliquée au préalable, dans lequel ledit article manufacturé (P) a une surface supérieure (Ps), une surface de tête (Pt), une surface de queue (Pc), deux surfaces latérales (PI) et une surface inférieure (Pi), comprenant
au moins une source de rayonnement (41, 61) pour le traitement de ladite peinture photosensible,
un système de transport (3), sur lequel ledit article manufacturé (P) est déplacé dans une direction avant (A), et
une chambre inerte (8), dans laquelle une atmosphère inerte est maintenue,
**caractérisé**
**en ce que** ledit système de transport (3) comprend une première bande transporteuse (31a) et une deuxième bande transporteuse (31b), disposées de manière adjacente et en série, de sorte que l'article manufacturé (P) puisse passer de ladite première bande transporteuse (31a) à ladite deuxième bande transporteuse (36), tout en se déplaçant dans ladite direction avant (A),
**en ce que** ladite première bande transporteuse (31a) est disposée, au moins en grande partie, à l'extérieur de ladite chambre inerte (8), et
**en ce que** ladite deuxième bande transporteuse (31b) est disposée, au moins en grande partie, à l'intérieur de ladite chambre inerte (8).

2. Appareil (1; 1') selon la revendication précédente, **caractérisé en ce qu'**il comprend une cloison (81), agencée pour délimiter ladite chambre inerte (8), ayant une ouverture (82), à travers laquelle passe ledit article manufacturé (P) lorsqu'il entre dans ladite chambre inerte (8), en se déplaçant de ladite première bande transporteuse (31a) à ladite seconde bande transporteuse (31b).

3. Appareil (1; 1') selon l'une quelconque des revendications précédentes, **caractérisé**
**en ce que** ledit système de transport (3) comprend au moins un groupe optique ayant une cavité de logement (335, 345), disposé en correspondance de ladite au moins une source de rayonnement (41, 61),
**en ce que** ledit au moins un groupe optique (33, 34) comprend un élément réfléchissant (334, 344), disposé dans ladite cavité du boîtier (335, 345), en correspondance de ladite source de rayonnement (41, 61), de manière à diffuser son rayonnement émis,
dans lequel ledit élément réfléchissant (334, 344) a une forme superficielle de manière à répartir le rayonnement incident sur ladite surface de tête (Pt) et sur ladite surface de queue (Pc) lorsque respectivement ledit panneau (P) se rapproche et s'éloigne de ladite cavité de logement (335, 345) alors qu'il est déplacé par ledit système d'acheminement (3).

4. Appareil (1; 1') selon la revendication précédente, **caractérisé en ce que** ledit élément réfléchissant (334, 344) est disposé, avec son extension longitudinale, transversalement par rapport à ladite direction avant (A) dudit article manufacturé (P).

5. Appareil (1; 1') selon l'une quelconque des revendications 3 ou 4, **caractérisé en ce que** ledit élément réfléchissant (334, 344) a une extension longitudinale qui dépasse la largeur dudit article manufacturé (P), et il est disposé transversalement par rapport à ladite direction avant (A) dudit article manufacturé (P), pour répartir le rayonnement incident sur lesdites surfaces latérales (PI) dudit article manufacturé (P) pendant qu'il passe au-dessus de ladite cavité de logement (335, 345).

6. Appareil (1; 1') selon l'une quelconque des revendications 3 à 5, **caractérisé en ce que** ledit élément réfléchissant (334, 344) a l'une des formes suivantes:
convexe, formé par deux plans disposés en forme de V inversé;
concave, formé par deux plans disposés en forme de **V;**
formé par deux surfaces courbes jointes le long d'une ligne, de sorte qu'il présente une section en forme de cuspide.

7. Appareil (1; 1') selon l'une quelconque des revendications 3 à 6, **caractérisé en ce que** ledit au moins un groupe optique (33, 34) comprend:
un cylindre inférieur (331, 341), renvoyant ladite au moins une bande transporteuse (31a, 31b); et
une paire de cylindres de renvoi (332, 333 et 342, 343), disposés de manière à dévier la trajectoire verticale de la bande transporteuse (31a, 31b);
dans lequel ledit cylindre inférieur (331, 341) et ladite paire de cylindres de retour (332, 333 et 342, 343) réalisent la cavité de logement (335, 345) sur ladite au moins une bande transporteuse (31a, 31b), sous la surface de glissement sur la bande transporteuse (31, 35, 36) de l'article manufacturé (P); et
dans lequel ledit élément réfléchissant (334, 344) est disposé au-dessus et en correspondance avec ledit cylindre inférieur (331, 341).

8. Appareil (1; 1') selon l'une quelconque des revendications 3 à 7, **caractérisé par le fait que** la surface réfléchissante dudit élément réfléchissant (334, 344) est lisse et/ou martelée et/ou glacée et/ou plissée.

9. Appareil (1; 1') selon l'une quelconque des revendications précédentes, **caractérisé en ce qu'**il comprend:
un poste de prégélification (4), comportant une source de rayonnement ultraviolet (41); et
une station d'irradiation excimère (6), comportant une lampe excimère (61), et disposée en aval de ladite station de prégélification;
**en ce que** ledit système de transport (3) comprend un premier groupe optique (33), disposé en correspondance de ladite source de rayonnement ultraviolet (41), et **en ce que** ledit système de transport (3) comprend un second groupe optique (34), disposé en correspondance de ladite lampe excimère (61).

10. Appareil (1; 1") selon l'une quelconque des revendications précédentes, **caractérisé en ce qu'**il comprend un poste d'injection d'azote (5), comprenant au moins un injecteur d'azote (51, 52), disposé sur la surface de ladite seconde bande transporteuse (31b), disposé en amont dudit poste d'irradiation excimère (6), et
au moins un injecteur d'azote (53), disposé sous la surface de la seconde bande transporteuse (31b), en amont de la station d'irradiation excimère (6),
dans lequel lesdits injecteurs d'azote (51, 52, 53) sont configurés pour émettre de l'azote sur ladite seconde bande transporteuse (31b).

11. Appareil (1; 1") selon la revendication précédente, **caractérisé en ce qu'**il comprend un autre injecteur d'azote (54), disposé en aval de ladite station d'irradiation excimère (6).

12. Appareil (1) selon l'une quelconque des revendications précédentes, **caractérisé en ce qu'**il comprend une station de polymérisation (7), dotée d'une lampe ultraviolette au gallium (71), et
une lampe ultraviolette au mercure (72), disposée en série avec ladite lampe ultraviolette au gallium (71).

13. Appareil (1') selon l'une quelconque des revendications précédentes, **caractérisé en ce qu'**il comprend un groupe de traitement à l'azote (9), ayant un ventilateur de recirculation (91), pour recirculer l'azote contenu dans ladite chambre inerte (8),
un conduit de recirculation (92), dont la première extrémité est reliée au ventilateur de recirculation (91),
une porte d'entrée (93), à laquelle est raccordée une deuxième extrémité dudit conduit de recirculation (92), et
un ventilateur d'extraction (94), pour extraire l'azote épuisé de ladite chambre inerte (8).

14. Appareil (1') selon la revendication précédente, lorsqu'il dépend de la revendication 9, **caractérisé en ce que** ledit ventilateur de recirculation (91) est disposé dans la partie supérieure de la chambre inerte (8) et en aval de ladite station d'irradiation excimère (6).

15. Appareil (1') selon l'une quelconque des revendications 13 ou 14, lorsqu'il dépend de la revendication 9, **caractérisé en ce que** ledit ventilateur d'extraction (94) est disposé dans la partie inférieure de ladite chambre inerte (8) et en aval de ladite station d'irradiation excimère (6).

16. Appareil (1') selon l'une des revendications 13 à 15, **caractérisé par le fait que** la porte d'entrée (93) est située sur la cloison (81).
